# EUROPEAN PATENT APPLICATION

(11) **EP 4 811 102 A1**
(43) Date of publication of application: **23.09.2026**
(21) Application number: 25196611.5
(22) Date of filing: 19.08.2025
(51) Int. Cl.: G06F 3/12

(54) **INFORMATION PROCESSING SYSTEM, PROGRAM, COMPUTER PROGRAM PRODUCT, AND COMPUTER READABLE RECORDING MEDIUM**

(30) Priority: 18.03.2025 JP 2025043473
(71) Applicant: Fujifilm Business Innovation Corp., Tokyo 107-0052 (JP)
(72) Inventor: YAMASAKI, Naoto, Yokohama (JP)
(74) Representative: Meissner Bolte Partnerschaft mbB

(57) **Abstract**

An information processing system includes at least one processor configured to: arrange and display plural events along a temporal axis; receive input of a time frame in which a new event is to be arranged; if an existing event is present in the time frame in which the new event is to be arranged, change, based on a priority level of the existing event and a priority level of the new event, a time frame of an event with a low priority level out of the existing event and the new event without changing a time frame of an event with a high priority level; and display the existing event and the new event.

## Description

### Background

### (i) Technical Field

The technology disclosed herein relates to an information processing system, a program, a computer program product, and a computer readable recording medium.

### (ii) Related Art

International Publication No. 2023/007575 discloses a schedule management apparatus. The schedule management apparatus includes a schedule acquirer that acquires schedule information of a target person, an additional event acquirer that acquires additional event information indicating an additional event to be added to the schedule information of the target person, and an event adder that adds the additional event to the schedule information using the additional event information. The schedule information includes at least one piece of set event information indicating a set event to be conducted by the target person. The set event information includes a start time and an end time of the set event. The additional event information includes a start time and an end time of the additional event. If the set event and the additional event overlap each other on the temporal axis, the event adder changes the start time and the end time of the set event so that the set event and the additional event do not overlap each other.

### Summary

There is known a schedule management method in which, when a new event is to be added later into a time frame in which the new event overlaps an existing event, the events are adjusted so that the existing event and the new event do not overlap each other on the temporal axis. In this schedule management method, the existing event and the new event are handled in an equal relationship. Even if one of the events has priority over the other, the events are shifted as appropriate so that the events do not overlap each other on the temporal axis.

Accordingly, it is an object of the present disclosure to provide an information processing system, a program, a computer program product, and a computer readable recording medium that may appropriately adjust a schedule in consideration of the priority levels of an existing event and a new event.

According to a first aspect of the present disclosure, there is provided an information processing system comprising at least one processor configured to: arrange and display a plurality of events along a temporal axis; receive input of a time frame in which a new event is to be arranged; if an existing event is present in the time frame in which the new event is to be arranged, change, based on a priority level of the existing event and a priority level of the new event, a time frame of an event with a low priority level out of the existing event and the new event without changing a time frame of an event with a high priority level; and display the existing event and the new event.

According to a second aspect of the present disclosure, in the information processing system according to the first aspect, the processor is configured to arrange the event with the low priority level out of the existing event and the new event in a time frame before or after the event with the high priority level.

According to a third aspect of the present disclosure, in the information processing system according to the first or second aspect, the processor is configured to receive input of the priority level of the new event and the priority level of the existing event by a user.

According to a fourth aspect of the present disclosure, in the information processing system according to any one of the first to third aspects, the processor is configured to, if one of the existing event and the new event is execution of a monochrome print job and another one of the existing event and the new event is execution of a multicolor print job, set a higher priority level for an event related to the execution of the monochrome print job than for an event related to the execution of the multicolor print job.

According to a fifth aspect of the present disclosure, in the information processing system according to any one of the first to fourth aspects, the processor is configured to: acquire a first downtime that is a preparatory period until a printer starts print corresponding to the new event when the existing event is to be processed earlier than the new event, and a second downtime that is a preparatory period until the printer starts print corresponding to the existing event when the new event is to be processed earlier than the existing event; and set a higher priority level for an event to be processed earlier than for an event to be processed later to achieve a shorter downtime out of the first downtime and the second downtime.

According to a sixth aspect of the present disclosure, in the information processing system according to any one of the first to fifth aspects, the processor is configured to, if the event with the low priority level out of the existing event and the new event is arranged after the event with the high priority level and an end time of the event with the low priority level is later than a start time of another postprocess, reverse the priority level of the existing event and the priority level of the new event.

According to a seventh aspect of the present disclosure, in the information processing system according to any one of the first to sixth aspects, the processor is configured to, if the event with the low priority level is execution of a print job and an end time of the print job is later than the start time of the postprocess associated with the print job, reverse the priority level of the existing event and the priority level of the new event.

According to an eighth aspect of the present disclosure, in the information processing system according to any one of the first to seventh aspects, the processor is configured to display an alert if the event with the low priority level out of the existing event and the new event is arranged before or after the event with the high priority level and the processor determines that a preset condition is satisfied for the event with the low priority level.

According to a ninth aspect of the present disclosure, in the information processing system according to any one of the first to eighth aspects, the processor is configured to determine that the condition is satisfied if the event with the low priority level out of the existing event and the new event is arranged after the event with the high priority level and an end time of the event with the low priority level is later than a start time of another postprocess.

According to a tenth aspect of the present disclosure, in the information processing system according to any one of the first to ninth aspects, the processor is configured to determine that the condition is satisfied if the event with the low priority level out of the existing event and the new event is arranged before or after the event with the high priority level and part or all of a period from a start time to an end time of the event with the low priority level overlaps a non-operating period in which a printer is not operating.

According to an eleventh aspect of the present disclosure, in the information processing system according to any one of the first to tenth aspects, the processor is configured to determine that the condition is satisfied if the event with the low priority level out of the existing event and the new event is arranged before or after the event with the high priority level, part or all of a period from a start time to an end time of the event with the low priority level overlaps still another existing event, and the other existing event has a higher priority level than the event with the low priority level.

According to a twelfth aspect of the present disclosure, in the information processing system according to any one of the first to eleventh aspects, the processor is configured to, if the event with the low priority level out of the existing event and the new event is arranged before or after the event with the high priority level and a preset condition is satisfied, split the event with the low priority level across the event with the high priority level.

According to a thirteenth aspect of the present disclosure, in the information processing system according to any one of the first to twelfth aspect, the processor is configured to receive input of setting made by a user as to whether to split the event with the low priority level.

According to a fourteenth aspect of the present disclosure, in the information processing system according to any one of the first to thirteenth aspects, the processor is configured to: if the event with the low priority level is execution of a print job using a digital printer, split the event with the low priority level across the existing event with the high priority level; and if the event with the low priority level is execution of a print job using an offset printer, arrange the event with the high priority level and the event with the low priority level in parallel.

According to a fifteenth aspect of the present disclosure, in the information processing system according to any one of the first to fourteenth aspects, the processor is configured to use a machine learning model trained based on a setting history as to whether the event with the low priority level has been split in response to input of setting made by a user as to whether to split the event with the low priority level, and determine, if time frames of different events overlap each other, whether to split an event with a low priority level out of the different events based on the machine learning model.

According to a sixteenth aspect of the present disclosure, in the information processing system according to any one of the first to fifteenth aspects, the processor is configured to display guidance to notify a user that the new event is arranged after the existing event.

According to a seventeenth aspect of the present disclosure, in the information processing system according to any one of the first to sixteenth aspects, the processor is configured to display guidance to notify a user about a change of the events.

According to an eighteenth aspect of the present disclosure, there is provided a program causing a computer to execute a process comprising: arranging and displaying a plurality of events along a temporal axis; receiving input of a time frame in which a new event is to be arranged; if an existing event is present in the time frame in which the new event is to be arranged, changing, based on a priority level of the existing event and a priority level of the new event, a time frame of an event with a low priority level out of the existing event and the new event without changing a time frame of an event with a high priority level; and displaying the existing event and the new event.

According to a nineteenth aspect of the present disclosure, there is provided a computer program product comprising a program causing a computer to execute a process comprising: arranging and displaying a plurality of events along a temporal axis; receiving input of a time frame in which a new event is to be arranged; if an existing event is present in the time frame in which the new event is to be arranged, changing, based on a priority level of the existing event and a priority level of the new event, a time frame of an event with a low priority level out of the existing event and the new event without changing a time frame of an event with a high priority level; and displaying the existing event and the new event.

According to a twentieth aspect of the present disclosure, there is provided a computer readable recording medium storing a program causing a computer to execute a process comprising: arranging and displaying a plurality of events along a temporal axis; receiving input of a time frame in which a new event is to be arranged; if an existing event is present in the time frame in which the new event is to be arranged, changing, based on a priority level of the existing event and a priority level of the new event, a time frame of an event with a low priority level out of the existing event and the new event without changing a time frame of an event with a high priority level; and displaying the existing event and the new event.

According to the first aspect of the present disclosure, the schedule may be adjusted in consideration of the priority levels of the existing event and the new event, and the schedule may be managed as intended by the user.

According to the second aspect of the present disclosure, the new event may be arranged while maintaining the existing event with the high priority level.

According to the third aspect of the present disclosure, the user may set any priority level.

According to the fourth aspect of the present disclosure, color migration is prevented and the print quality is improved by processing the monochrome print with priority.

According to the fifth aspect of the present disclosure, the printer adjustment period (downtime) may be minimized, and the tasks may be changed smoothly.

According to the sixth aspect of the present disclosure, the adjustment may be executed by moving the existing event so as not to affect the start of the postprocess.

According to the seventh aspect of the present disclosure, the effect on the schedule of the postprocess may be minimized, and the process transition may be made smoothly.

According to the eighth aspect of the present disclosure, the user may make appropriate decision by displaying the alert before a problem arises due to the schedule change.

According to the ninth aspect of the present disclosure, the effect on the schedule of the postprocess may be minimized.

According to the tenth aspect of the present disclosure, the schedule may be adjusted in consideration of the non-operating period.

According to the eleventh aspect of the present disclosure, the schedule may be adjusted in consideration of the job with a higher priority level.

According to the twelfth aspect of the present disclosure, the flexibility of the schedule may be improved, and the event may be adjusted by being arranged across the existing event.

According to the thirteenth aspect of the present disclosure, the user may manually make setting. Therefore, the schedule may be adjusted in a specific situation.

According to the fourteenth aspect of the present disclosure, the schedule may be adjusted in consideration of the characteristics of the digital printer and the offset printer.

According to the fifteenth aspect of the present disclosure, the optimum schedule may automatically be determined by learning the past schedule setting history.

According to the sixteenth aspect of the present disclosure, the schedule adjustment may be visualized and erroneous operation may be prevented by providing the guidance to the user.

According to the seventeenth aspect of the present disclosure, the user may grasp the schedule change in real time, and appropriate adjustment may be achieved.

According to the eighteenth aspect of the present disclosure, the schedule adjustment may be automated by the program, and the burden of manual adjustment may be reduced.

According to the nineteenth aspect of the present disclosure, the program may be provided as the computer program product including the program, and may be utilized in various system environments.

According to the twentieth aspect of the present disclosure, the program is stored in the computer readable recording medium to facilitate distribution and introduction of software.

### Brief Description of the Drawings

An exemplary embodiment of the present disclosure will be described in detail based on the following figures, wherein:
Fig. 1 illustrates an example of the configuration of an information processing system according to the exemplary embodiment of the present disclosure;
Fig. 2 illustrates an example of the functional configuration of a processor;
Fig. 3 illustrates an example of a new event and an existing event;
Fig. 4 illustrates an example of the new event and the existing event;
Fig. 5 illustrates an example of the new event and the existing event;
Fig. 6 illustrates an example of the new event and the existing event;
Fig. 7 illustrates an example of the new event and the existing event;
Fig. 8 illustrates an example of the new event and the existing event;
Fig. 9 illustrates an example of the new event and the existing event;
Fig. 10 illustrates an example of the new event and the existing event;
Fig. 11 illustrates an example of the new event and the existing event;
Fig. 12 illustrates an example of the new event and the existing event;
Fig. 13 illustrates an example of the new event and the existing event;
Fig. 14 illustrates an example of the new event and the existing event;
Fig. 15 illustrates an example of the new event and the existing event;
Fig. 16 illustrates an example of the new event and the existing event;
Fig. 17 illustrates an example of the new event and the existing event;
Fig. 18 illustrates an example of the new event and the existing event;
Fig. 19 illustrates an example of the new event and the existing event;
Fig. 20 illustrates an example of the new event and the existing event;
Fig. 21 illustrates an example of the new event and the existing event;
Fig. 22 illustrates an example of the new event and the existing event; and
Fig. 23 is a flowchart illustrating an operation of the information processing system.

### Detailed Description

An exemplary embodiment of the technology disclosed herein is described below with reference to the drawings. In the drawings, the same or equivalent components and parts are denoted by the same reference signs. The dimensional ratio of each drawing is exaggerated for convenience of description, and may be different from the actual ratio.

### (Exemplary Embodiment)

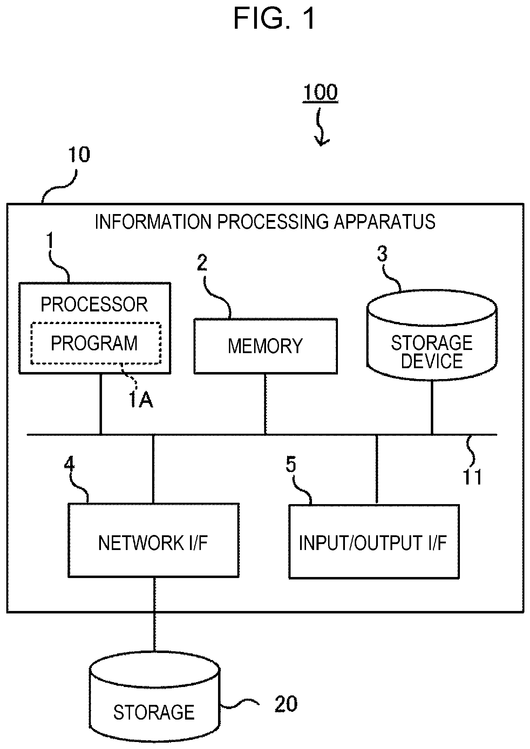

Fig. 1 illustrates an example of the configuration of an information processing system 100 according to the exemplary embodiment of the present disclosure. The information processing system 100 may be construed as, for example, an apparatus that manages print schedules of printers etc. The information processing system 100 includes an information processing apparatus 10 and a storage 20. The information processing apparatus 10 includes a processor 1, a memory 2, a storage device 3, a network interface 4, an input/output interface 5, and a bus 11.

The bus 11 is a data transmission path for mutual data exchange among the processor 1, the memory 2, the storage device 3, the network interface 4, and the input/output interface 5. The method for connecting the processor 1 and other components is not limited to the bus connection.

The processor 1 is implemented by a central processing unit (CPU), a graphics processing unit (GPU), etc. The memory 2 is a main memory implemented by a random access memory (RAM) etc.

The storage device 3 is an auxiliary memory implemented by a hard disk drive (HDD), a solid state drive (SSD), a memory card, a read only memory (ROM), etc. The storage device 3 stores a program 1A that implements functions of the information processing apparatus 10. The processor 1 reads and executes the program 1A on the memory 2 to implement the functions associated with the program 1A. The storage device 3 also functions as the storage 20.

The network interface (I/F) 4 connects the information processing apparatus 10 to a network. Examples of the network include a local area network (LAN) and a wide area network (WAN). The method for connection to the network by the network interface 4 may be wireless connection or wired connection. The information processing apparatus 10 may communicate with a mobile terminal operated by a user of the information processing apparatus 10 via the network interface 4.

The input/output interface (I/F) 5 connects the information processing apparatus 10 to various input/output devices. For example, the information processing apparatus 10 communicates with input devices operated by the user of the information processing apparatus 10, such as a keyboard and a mouse, via the input/output interface 5.

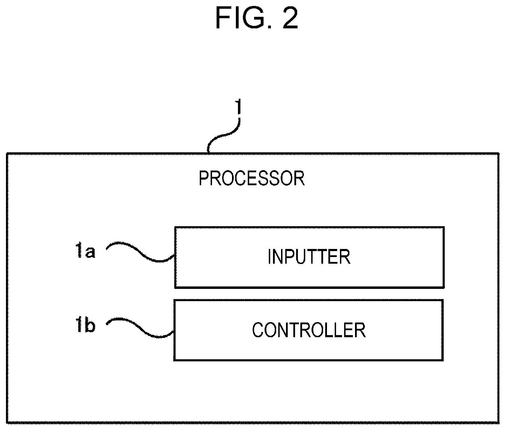

Fig. 2 illustrates an example of the functional configuration of the processor 1. As illustrated in Fig. 2, the processor 1 includes an inputter 1a and a controller 1b. These functions are implemented when the processor 1 reads the program 1A stored in the memory 2 or the storage device 3, loads the program 1A on the RAM, and executes the program 1A.

### (Inputter 1a)

The inputter 1a has a function of receiving schedule information from the user. Specifically, the inputter 1a has the following function.

For example, when the user inputs a desired time, a duration, a priority level, and an event type (e.g., print job), the input information is transmitted to the inputter 1a. Specifically, when information indicating a request to change an existing event, a new time frame, and a priority level are designated, the inputter 1a inputs the information for designating these items, information indicating a request to delete the schedule, etc. For example, in a case of reception of priority level setting, when the user sets the priority level of each event in the form of "High (urgent)," "Medium (normal)," or "Low (optional)," the inputter 1a receives information indicating the priority level.

### (Overview of Functions of Controller 1b)

The controller 1b processes input information and data, and makes determination to optimize the print schedules. In particular, the controller 1b has the following functions.

### (Arrangement and Adjustment of Events)

The controller 1b arranges events on the temporal axis, and adjusts the schedule based on priority levels.

### (Minimization of Downtime)

The controller 1b calculates switching periods (downtimes) of print jobs, and determines an optimum processing sequence. For example, the controller 1b compares a case where a print job A is executed first and a print job B is executed next and a case where the print job B is executed first and the print job A is executed next, and selects a sequence with a shorter downtime.

### (Conjunction with Postprocesses)

The controller 1b executes adjustment so that an event change does not affect postprocesses (e.g., bookbinding, cutting, and packing). For example, when the print job is behind schedule, the schedule of postprocesses associated with the print job is modified appropriately.

### (Condition Determination and Alert)

If an event change satisfies a specific condition, the controller 1b displays an alert. For example, when an event with a low priority level ends later than the start time of the postprocess, the controller 1b issues an alert that "the postprocess may be delayed."

### (Split of Event)

The controller 1b splits a long-duration event (e.g., print job) into a plurality of time slots so that the event may be conducted in parallel with other events. In consideration of a difference between a digital printer and an offset printer, the controller 1b sets a schedule appropriate for these printers.

### (Optimization by Machine Learning)

The controller 1b learns past schedule data, and automatically generates an optimum schedule in consideration of the tendency of the user.

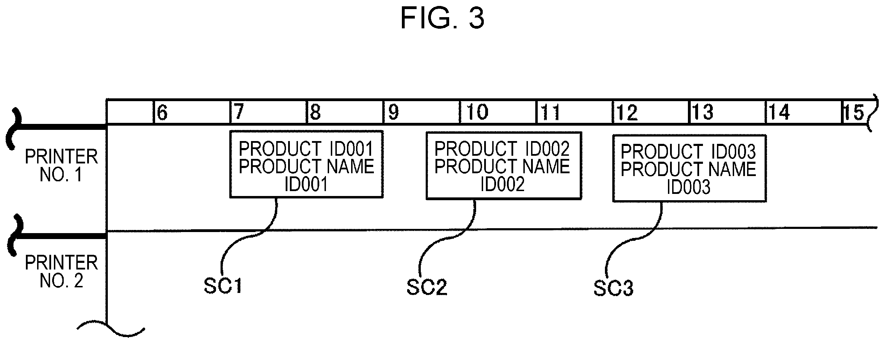

The functions of the controller 1b are described below in detail with reference to Fig. 3 etc.

The controller 1b arranges and displays a plurality of events along the temporal axis as illustrated in Fig. 3 based on information and data input to the inputter 1a. Fig. 3 illustrates an example in which the plurality of displayed events is three different print schedules. In the example of Fig. 3, a print schedule SC1 is set as an existing event on 7:00 to 9:00 of a specific day, a print schedule SC2 is set as an existing event on 9:30 to 11:30, and a print schedule SC3 is set as an existing event on 12:00 to 14:00. In this way, a print event scheduled for each print equipment is displayed in a card format. The left end of the card indicates a print start time, the right end of the card indicates a print end time, and the width of the card indicates an estimated duration of the print job.

The print schedule SC1, the print schedule SC2, and the print schedule SC3 are displayed in this order on, for example, a liquid crystal screen that is used by the user to manage the print schedules. In Fig. 3, the start times and the end times of the schedules do not overlap each other.

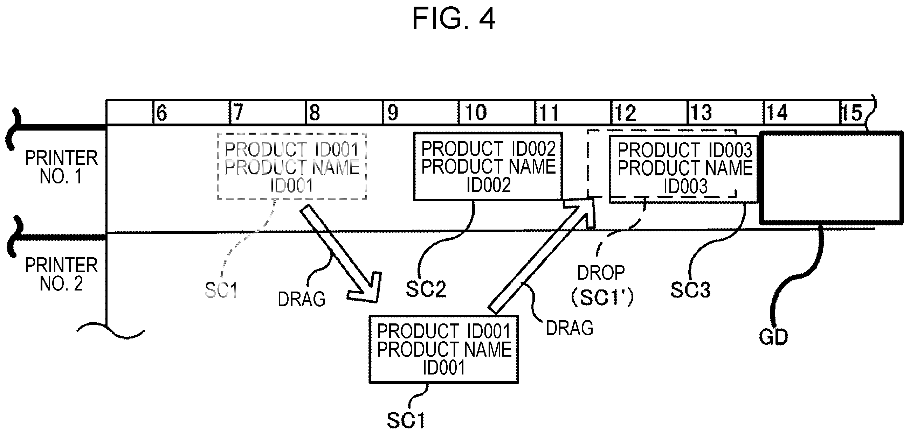

To change the time frame of the print schedule SC1, the user drags and drops the print schedule SC1 as illustrated in, for example, Fig. 4.

When the user drags a card indicating a new event and sets (drops) the card to an area of the existing event (position indicated by a broken line in Fig. 4), the time to be set for the new event may overlap the existing event.

In the example of Fig. 4, the print schedule SC1 is to be set as a new event (print schedule SC1') in a time frame of 11:45 to 13:45. In this case, part of the print schedule SC1' overlaps the existing print schedule SC3. In the example of Fig. 4, at least the end time of the print schedule SC1' overlaps the start time of the existing print schedule SC3.

When the new event and the existing event may overlap each other at least in part, the controller 1b compares the priority levels of the existing event and the new event.

### (Overview of Priority Level Determination Method)

(1) The controller 1b may give priority to a print event, for example, when the print event is an existing print event and the start of the postprocess subsequent to the print event is delayed if the print event is moved.
(2) The controller 1b may set the priority levels to reduce a change in downtime of the printer due to a change in print attribute, such as switching between color print and monochrome print.
(3) The controller 1b may set the priority levels in accordance with the priority order explicitly designated by the user.

### (Case Where Existing Event Has High Priority Level)

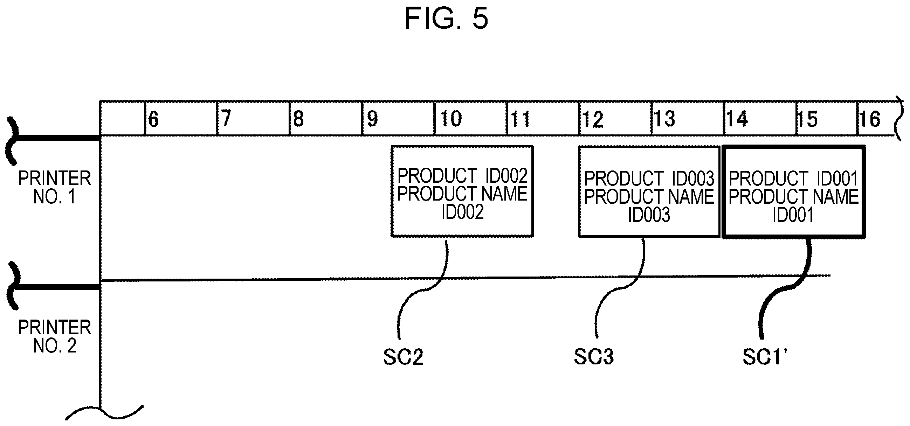

When the priority level of the existing event is higher than the priority level of the new event and the drop operation is performed, the controller 1b may set the new event after the existing event without shifting the time of the existing event as illustrated in Fig. 5. Specifically, when the card of the print schedule SC1 is dropped, the controller 1b sets the print schedule SC1' immediately after the print schedule SC3 because the priority level of the print schedule SC3 is high.

At this time, the controller 1b may display, as illustrated in Fig. 4, a guide GD indicating that the new event (print schedule SC1') is to be arranged after the print schedule SC3. The guide GD may be, for example, a rectangular frame image roughly showing the position of the new event to be arranged, and a color such as red, blue, or yellow may be set.

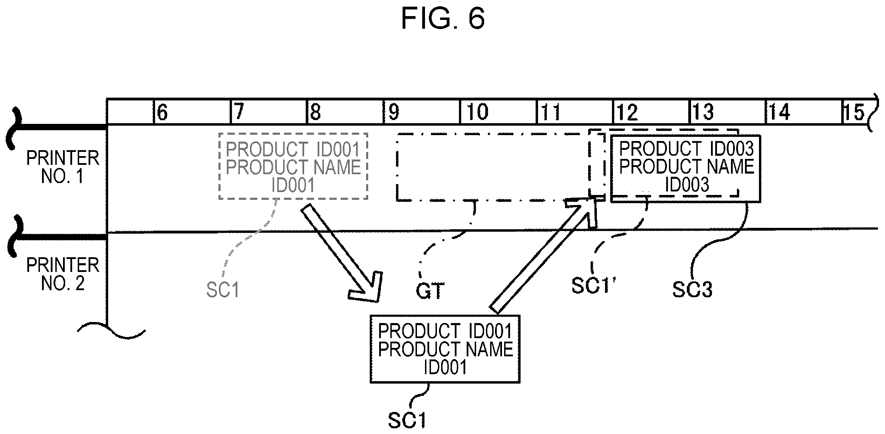

In Fig. 5, the new event is arranged after the existing event, but the controller 1b may set the new event before the existing event. For example, if an in-between period GT to which the time frame of the new event (print schedule SC1') is assignable is present before the existing print schedule SC3 as illustrated in Fig. 6, the controller 1b may set the print schedule SC1' before the print schedule SC3.

For example, if another existing event is present before the existing print schedule SC3 and the period from the end time of the other existing event to the start time of the existing print schedule SC3 is longer than the duration of the new event, the controller 1b may determine that the in-between period GT is present before the existing print schedule SC3. If no other existing event is present before the existing print schedule SC3, the controller 1b may similarly determine that the in-between period GT is present before the existing print schedule SC3.

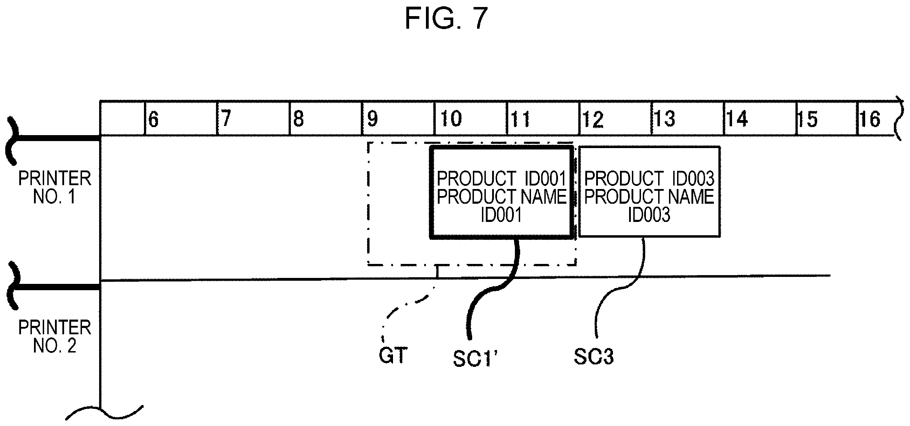

For example, if the in-between period GT in which the event with the low priority level is arrangeable before the event with the high priority level is present as illustrated in Fig. 6, the controller 1b sets the event with the low priority level before the event with the high priority level as illustrated in Fig. 7.

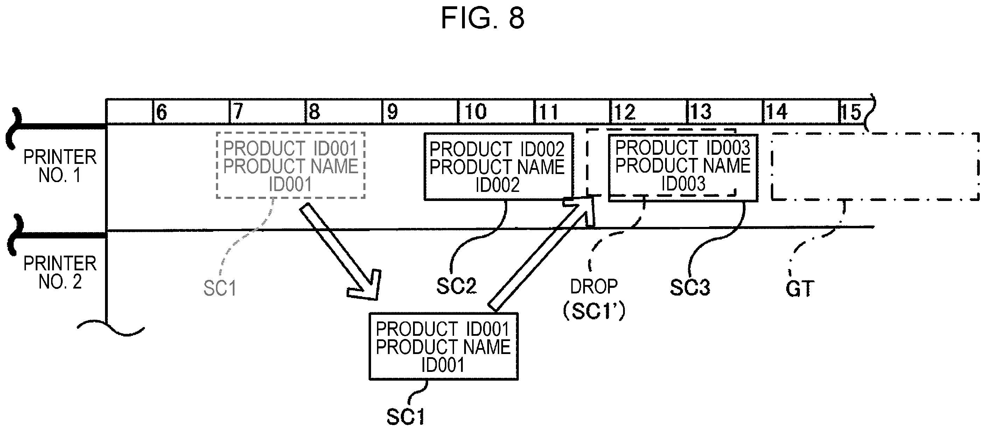

For example, if the print schedule SC2 is present before the existing print schedule SC3 and the period from the end time of the print schedule SC2 to the start time of the existing print schedule SC3 is shorter than the duration of the new event as illustrated in Fig. 8, the controller 1b determines that the in-between period GT is not present before the existing print schedule SC3. In this case, the controller 1b determines whether the in-between period GT is present after the existing event with the high priority level.

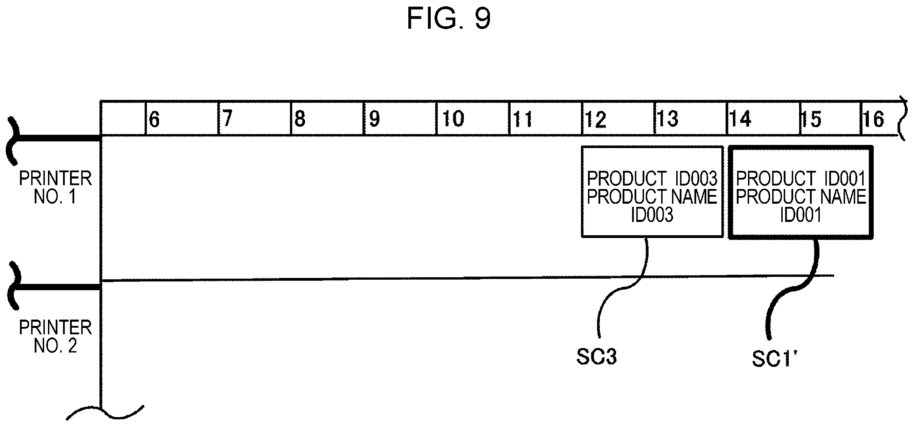

For example, if another existing event is present after the existing print schedule SC3 and the period from the end time of the existing print schedule SC3 to the start time of the other existing event is longer than the duration of the new event, the controller 1b may determine that the in-between period GT is present after the existing print schedule SC3. If no other existing event is present after the existing print schedule SC3, the controller 1b may similarly determine that the in-between period GT is present after the existing print schedule SC3. If the determination result shows that the in-between period GT is present after the existing event with the high priority level as illustrated in Fig. 8, the controller 1b may set the new event with the low priority level after the existing event with the high priority level as illustrated in Fig. 9.

### (Case Where New Event Has High Priority Level)

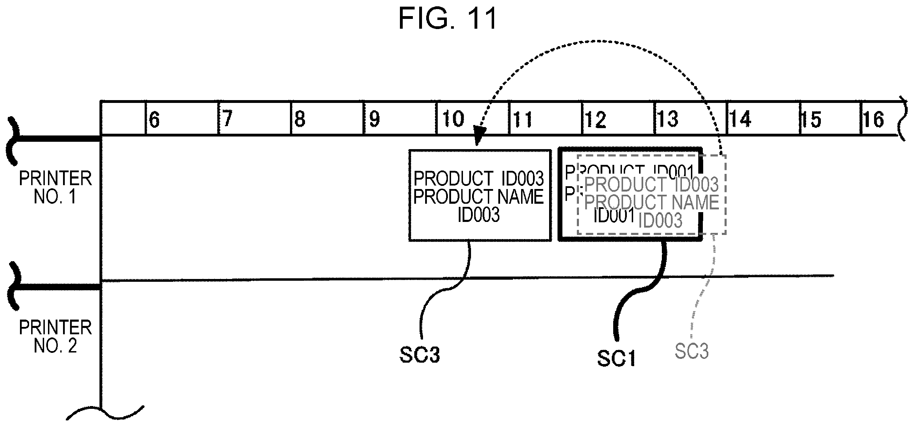

When the priority level of the new event is higher than the priority level of the existing event and the drop operation is performed, the controller 1b may set (move) the existing event before the new event without shifting the new event from the drop point as illustrated in Fig. 11. That is, the controller 1b may set the print schedule SC3 before the print schedule SC1'.

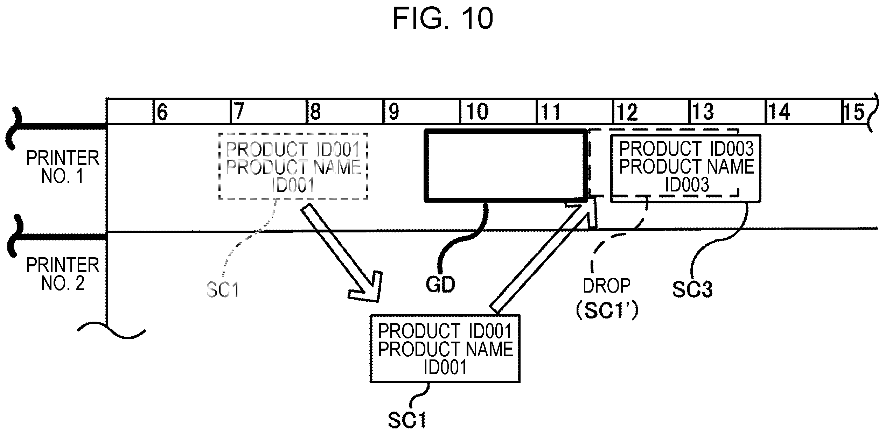

At this time, the controller 1b may display, as illustrated in Fig. 10, a guide GD indicating that the moved existing event (print schedule SC3) is to be arranged before the print schedule SC1'.

When the existing event is to be moved so as not to overlap the new event, the controller 1b may determine, as described above, whether the in-between period is present, and may set the movement position of the existing event.

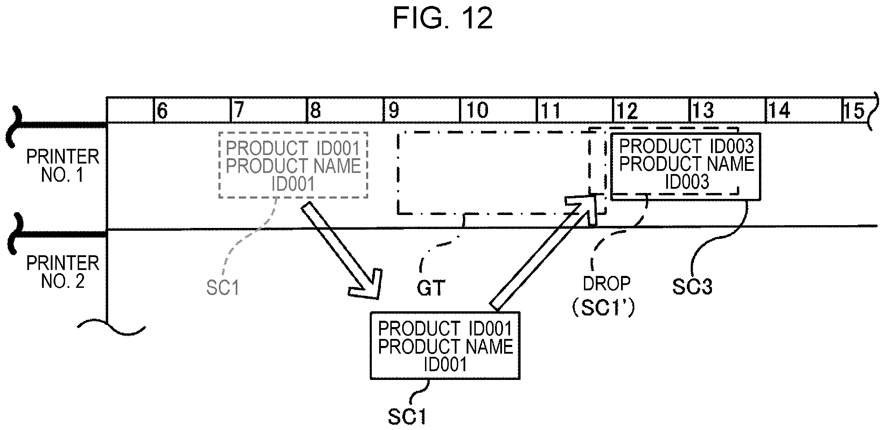

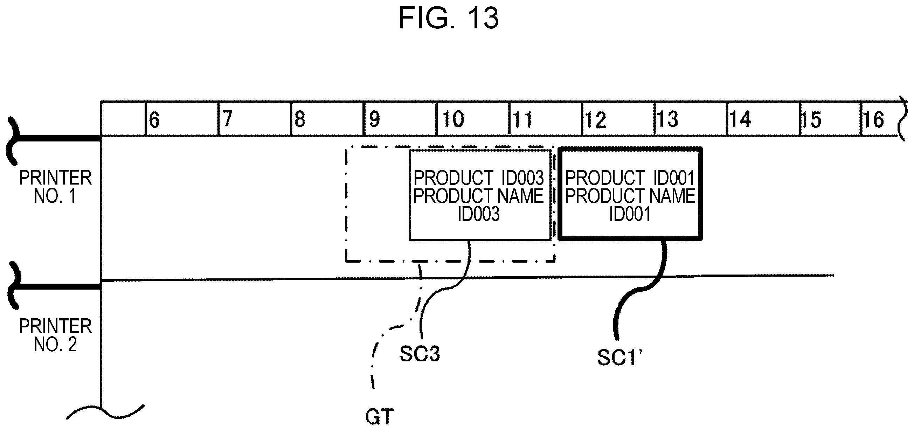

Specifically, the controller 1b determines whether the in-between period in which the event with the low priority level is arrangeable before the event with the high priority level is present. If the in-between period GT in which the event with the low priority level is arrangeable before the event with the high priority level is present as illustrated in Fig. 12, the controller 1b sets the event with the low priority level before the event with the high priority level as illustrated in Fig. 13.

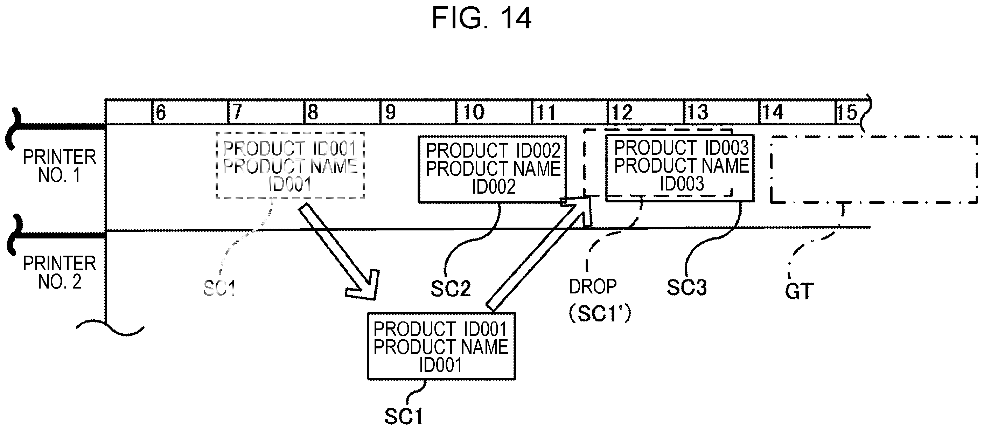

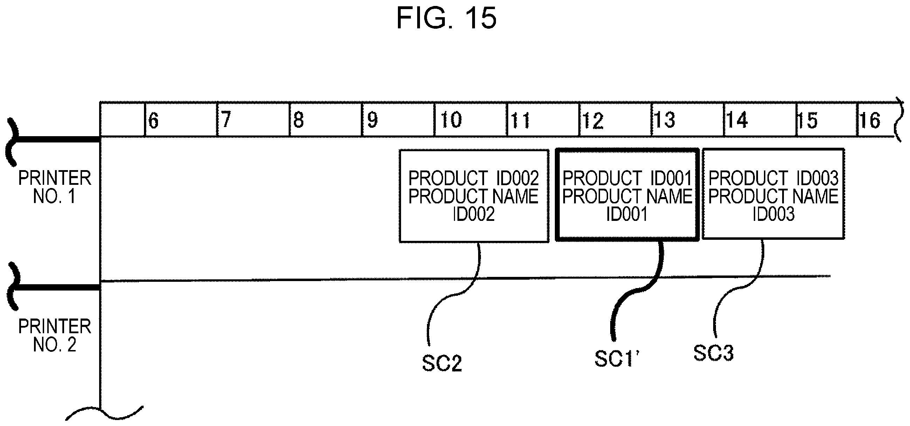

For example, if the in-between period GT is not present before the new event with the high priority level because the print schedule SC2 is present as illustrated in Fig. 14, the controller 1b determines whether the in-between period GT is present after the new event with the high priority level. If the determination result shows that the in-between period GT is present immediately after the existing event with the low priority level as illustrated in Fig. 14, the controller 1b may set the existing event with the low priority level after the new event with the high priority level as illustrated in Fig. 15.

Even if the event with the low priority level is moved to an area before or after the event with the high priority level, the moved event may overlap another existing event at the movement destination. In this case, as described above, the controller 1b may set the event to be moved as a new event, determine the priority levels of the new event and the other existing event at the movement destination, and move the event with a low priority level (new event or other existing event) to an area before or after the event with a high priority level so that the events do not overlap each other based on the priority level determination result.

As described above, the processor 1 may adjust the events in various modes in consideration of the priority levels of the events. The adjustment modes are organized into first to nineteenth modes and described below in detail using specific examples.

### (First Mode)

The inputter 1a may arrange and display a plurality of events along the temporal axis, and receive input of a time frame in which a new event is to be arranged. If an existing event is present in the time frame in which the new event is to be arranged, the controller 1b changes, based on the priority level of the existing event and the priority level of the new event, the time frame of the event with a low priority level out of the existing event and the new event without changing the time frame of the event with a high priority level, and displays the existing event and the new event.

According to the first mode, the schedule may be adjusted in consideration of the priority levels of the existing event and the new event, and the schedule may be managed as intended by the user. There is no need for manual adjustment, and the schedule may be adjusted automatically. Further, the effects on the downtime of the printer and the postprocesses are reduced, and the production efficiency may be improved.

### (Second Mode)

The controller 1b arranges the event with a low priority level out of the existing event and the new event in a time frame before or after the event with a high priority level.

According to the second mode, the new event may be arranged while maintaining the existing event with the high priority level. Therefore, the task with a high priority level is processed first. Thus, the stability of the schedule is improved, and the risk of delay in the job with the high priority level may be avoided.

### (Third Mode)

The inputter 1a receives input of the priority levels of the new event and the existing event by the user. For example, the user wants to register a new print event, and inputs information on print details (magazine cover print (multicolor print)), an expected start time (10:00), a duration (3 hours), a priority level (low), etc. To change the priority level of the existing event, the user may input the changed priority level. For example, if an urgent monochrome print job is present among the registered events and the start time is 10:30, the user may change the priority level of the monochrome print job to "high." When the inputter 1a receives the above information, the controller 1b recalculates the schedule based on the received information etc. For example, the new multicolor print job is moved to 13:00 or later so that the monochrome print job is started at 10:30 as scheduled. That is, the newly added multicolor print job is automatically adjusted to another time frame as the event with a low priority level.

According to the third mode, the user may set any priority level. Therefore, the schedule may be adjusted in consideration of the priority level of the specific job. Thus, a rule for priority levels unique to a company or project may be applied.

### (Fourth Mode)

If one of the existing event and the new event is execution of a monochrome print job and the other is execution of a multicolor print job, the controller 1b sets a higher priority level for the event related to the execution of the monochrome print job than for the event related to the execution of the multicolor print job.

For example, a print factory may handle both monochrome print and multicolor print. If the monochrome print is executed after the multicolor print, color migration or ink stain may occur. Therefore, the print schedule needs to be optimized. In general, the monochrome print job has priority over the multicolor print job. By completing the monochrome print before the multicolor print, the print quality may be maintained, the count of machine cleaning from ink may be reduced, and the production efficiency is improved. For example, the user registers a new multicolor print job. Specifically, information on a job name (pamphlet print (four colors)), an expected start time (10:00), a duration (3 hours), a priority level (normal), etc. is set. If "monochrome flier print (black)" from 9:30 with a duration of 1 hour has already been registered and the multicolor print is started at 10:00, the multicolor print may be started before completion of the monochrome print job.

In response to reception of the job information from the inputter 1a, the controller 1b automatically adjusts the start time of the multicolor print job because the monochrome print job has a higher priority level than the multicolor print job. As a result of the schedule adjustment, the monochrome print is set to, for example, 9:30 to 10:30 (unchanged), and the multicolor print is set to 10:30 to 13:30 (postponed). In this case, the controller 1b may issue a notification "The start time of the multicolor print job is changed to 10:30 because of priority of the monochrome print job."

According to the fourth mode, color migration is prevented and the print quality is improved by processing the monochrome print with priority. Further, printer ink management is optimized and unnecessary ink replenishment is reduced.

### (Fifth Mode)

The controller 1b acquires a first downtime that is a preparatory period until the printer starts print corresponding to the new event when the existing event is to be processed earlier than the new event, and a second downtime that is a preparatory period until the printer starts print corresponding to the existing event when the new event is to be processed earlier than the existing event, and sets a higher priority level for the event to be processed earlier than for the event to be processed later to achieve a shorter downtime out of the first downtime and the second downtime.

In a print factory, a predetermined downtime (preparatory period) is secured for printer setting change or adjustment. Therefore, the print schedule needs to be optimized to advance tasks with the shortest downtime. For example, the user sets a job name (catalog print, offset, four colors), a scheduled start time (14:00), a duration (3 hours), and a priority level (medium) as an existing print event. The user sets a job name (monochrome poster print, black), an expected start time (15:00), a duration (2 hours), a priority level (medium), etc. as a new print event. The controller 1b calculates downtimes based on the above information. For example, the controller 1b calculates the first downtime when the existing multicolor print is processed first and the new monochrome print is processed later as 30 minutes (ink is changed for the monochrome print after the multicolor print). The controller 1b calculates the second downtime when the new monochrome print is processed first and the existing multicolor print is processed later as 60 minutes (when the multicolor print is executed after the monochrome print, the period for ink replenishment and test print is long). Since the first downtime (30 minutes) is shorter than the second downtime (60 minutes), the controller 1b gives priority to the existing "multicolor print." As a result of the schedule adjustment, the catalog print (multicolor) is set to 14:00 to 17:00 (unchanged), and the monochrome poster print is set to 17:30 to 19:30 (postponed). In this case, the controller 1b may issue a notification "The downtime is reduced by processing the multicolor print job first, and the start time of the new event is changed to 17:30."

According to the fifth mode, the printer adjustment period (downtime) may be minimized, and the tasks may be changed smoothly. Thus, the production efficiency may be improved, and the equipment utilization factor may be maximized.

### (Sixth Mode)

If the event with a low priority level out of the existing event and the new event is arranged after the event with a high priority level and the end time of the event with the low priority level is later than the start time of another postprocess, the controller 1b reverses the priority levels of the existing event and the new event.

After the print process, a "postprocess" such as bookbinding, cutting, or packing may be provided. If the print is behind schedule, the postprocess is delayed, and the delivery date may be affected. The controller 1b according to the exemplary embodiment of the present disclosure reverses the priority levels as appropriate in consideration of the start time of the postprocess during the schedule adjustment. Specifically, when the existing print event and the new print event are set as follows, the controller 1b compares the priority levels of the existing print event and the new print event.

### (Existing print event)

Job name: catalog print (offset, four colors)
Scheduled start time: 10:00
Duration: 4 hours (end time: 14:00)
Priority level: high (high-priority project)
Start time of postprocess (bookbinding): 15:00

### (New print event)

Job name: monochrome flier print (monochrome)
Expected start time: 14:00
Duration: 2 hours (end time: 16:00)
Priority level: low (normal project)
Start time of postprocess (cutting): 16:30

Under the current schedule, there is no problem if the bookbinding (start time: 15:00) is executed after the catalog print (end time: 14:00). However, the cutting after the flier print (end time: 16:00) is started later than the start time of 16:30. Therefore, the process is delayed. The controller 1b determines whether the postprocess is to be affected when the event with the low priority level is arranged after the event with the high priority level. In this case, the controller 1b executes adjustment so that the new event (monochrome flier print) has a higher priority level and is to be processed first. As a result of the adjustment, the monochrome flier print is executed from 10:00 to 12:00 (the priority level is increased and the event is processed ahead of schedule), and the catalog print (multicolor) is executed from 12:00 to 16:00 (postponed). In this case, the controller 1b may issue a notification "The priority level of the new event is increased and the print sequence is changed to prevent the effect on the schedule of the postprocess."

According to the sixth mode, the adjustment may be executed by moving the existing event so as not to affect the start of the postprocess. Thus, smooth conjunction between the print process and the postprocess may be maintained, and the delay in the delivery date may be prevented.

### (Seventh Mode)

If the event with a low priority level is execution of a print job and the end time of the print job is later than the start time of a postprocess associated with the print job, the controller 1b reverses the priority levels of the existing event and the new event.

According to the seventh mode, the effect on the schedule of the postprocess may be minimized, and the process transition may be made smoothly. Thus, the delay in the postprocess after the print may be prevented. In particular, a possible bottleneck between the print and the postprocess may be eliminated and an efficient production flow may be maintained by appropriately setting the priority level of the print job. Since appropriate adjustment is executed in consideration of the effect of the schedule change on the postprocess, the overall task plan is optimized. Thus, the risk of delay in the delivery date may be reduced, stable production schedule may be maintained, and the printer utilization factor may be maximized.

### (Eighth Mode)

If the event with a low priority level out of the existing event and the new event is arranged before or after the event with a high priority level and the controller 1b determines that a preset condition is satisfied for the event with the low priority level, the controller 1b displays an alert.

For example, if a job with a low priority level satisfies a specific condition (e.g., the upper limit of the continuous operating period of the printer is exceeded or the postprocess is affected), the controller 1b displays a message "This change may delay the delivery date." to provide room for adjustment to the user.

For example, the controller 1b may display a message "In the current schedule, the continuous operating period of the printer exceeds 6 hours. To prevent trouble, the temporary stop of the operation is recommended."

According to the eighth mode, the user may make appropriate decision by displaying the alert before a problem arises due to the schedule change. Thus, unexpected trouble due to the schedule change may be prevented.

### (Ninth Mode)

If the event with a low priority level out of the existing event and the new event is arranged after the event with a high priority level and the end time of the event with the low priority level is later than the start time of another postprocess, the controller 1b determines that the preset condition is satisfied.

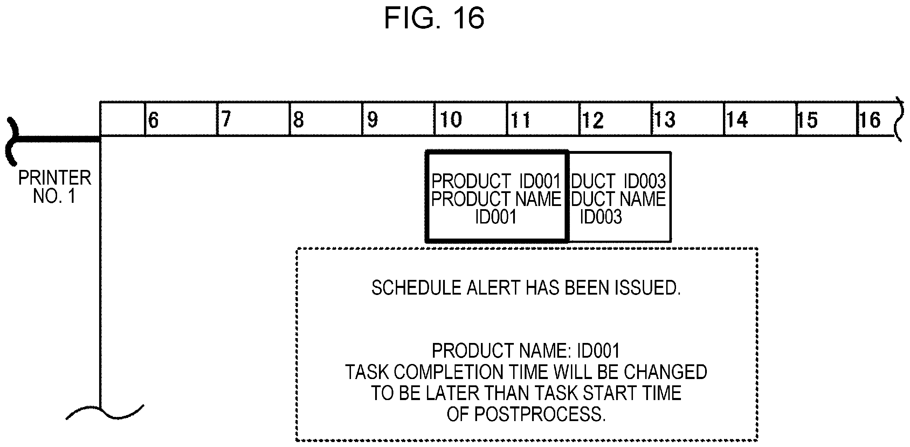

Specifically, as illustrated in Fig. 16, the controller 1b displays detailed information of an alert on the screen, and highlights the print event related to the alert so that the user may recognize the event. In the example of Fig. 16, the alert indicates that the task start time is delayed due to addition of a new event and the task will be incomplete before the start of the postprocess. A similar alert may be issued when the delayed existing event overlaps a non-operating period or an event with a high priority level is present subsequently.

According to the ninth mode, the effect on the schedule of the postprocess may be minimized, and the process transition may be made smoothly. Further, the delay in the postprocess after the print may be prevented.

### (Tenth Mode)

If the event with a low priority level out of the existing event and the new event is arranged before or after the event with a high priority level and part or all of the period from the start time to the end time of the event with the low priority level overlaps a non-operating period in which the printer is not operating, the processor 1 determines that the preset condition is satisfied.

In a print factory, the schedule needs to be managed in consideration of the operating period and the non-operating period (maintenance, ink replenishment, operator's rest period, etc.) of the printer. Particularly when a print job with a low priority level overlaps the non-operating period, the schedule needs to be adjusted.

When the existing print event and the new print event are set as follows, the controller 1b determines whether the start time or the end time of the event with the low priority level overlaps the non-operating period of the printer. If the condition is satisfied, the controller 1b adjusts the schedule appropriately.

### (Existing print event)

Job name: color booklet print (multicolor offset print)
Scheduled start time: 8:00
Duration: 5 hours (end time: 13:00)
Priority level: high (strict delivery date)
Start time of postprocess (bookbinding): 14:00

### (New print event)

Job name: advertisement flier print (monochrome print)
Expected start time: 13:00
Duration: 2 hours (end time: 15:00)
Priority level: low (normal project)

### (Non-operating period)

### Periodic printer maintenance period: 13:30 to 14:00 (non-operating period)

Under the current schedule, the color booklet print (8:00 to 13:00) may be executed, but the advertisement flier print (13:00 to 15:00) overlaps the non-operating period (13:30 to 14:00). That is, the printer maintenance is scheduled, and the print is not executed from 13:30 to 14:00.

In this case, the controller 1b changes the start time of the advertisement flier print to 14:00 or later. As a result of the schedule adjustment, the color booklet print (multicolor) is 8:00 to 13:00 (unchanged), the printer maintenance is 13:30 to 14:00 (non-operating period), and the advertisement flier print (monochrome) is 14:00 to 16:00 (postponed).

For example, the controller 1b may display a message "The start time of the new event is changed to 14:00 because of the non-operating period of the printer."

According to the tenth mode, the schedule may be adjusted in consideration of the non-operating period, and an unnecessary waiting period may be reduced. Thus, the print job may be arranged appropriately, and the work efficiency is improved.

### (Eleventh Mode)

If the event with a low priority level out of the existing event and the new event is arranged before or after the event with a high priority level, part or all of the period from the start time to the end time of the event with the low priority level overlaps still another existing event, and the other existing event has a higher priority level than the event with the low priority level, the controller 1b determines that the preset condition is satisfied.

When a plurality of events is set as follows, the event with the low priority level arranged during the print schedule adjustment may overlap the still other existing event.

### (Existing print event (A))

Job name: magazine feature page print (offset, four colors)
Scheduled start time: 9:00
Duration: 4 hours (end time: 13:00)
Priority level: high (strict delivery date)

### (New print event (B))

Job name: company-oriented flier print (monochrome print)
Expected start time: 13:00
Duration: 3 hours (end time: 16:00)
Priority level: low (normal project)

### (Still other existing event (C))

Job name: printer maintenance (periodic checkup)
Scheduled start time: 15:30
Duration: 2 hours (end time: 17:30)
Priority level: high (unchangeable because of machine maintenance)

Under the current schedule, the magazine feature page print (9:00 to 13:00) may be executed, but the company-oriented flier print (13:00 to 16:00) overlaps the maintenance with the high priority level in a period from 15:30 to 16:00. The printer maintenance (15:30 to 17:30) is unchangeable because of machine maintenance.

In this case, the controller 1b appropriately adjusts the schedule as follows in consideration of the priority level of the printer maintenance.
Magazine feature page print (9:00 to 13:00) (unchanged)
Company-oriented flier print (13:00 to 15:30) (the priority level is adjusted and the end time is moved up)
Printer maintenance (15:30 to 17:30) (unchanged)

For example, the controller 1b may display a message "The end time of the new event (company-oriented flier print) is changed to 15:30 because the event overlaps the periodic printer maintenance."

According to the eleventh mode, the schedule may be adjusted in consideration of the job with a higher priority level. Thus, the overall schedule is optimized by appropriately processing the job with the high priority level.

### (Twelfth Mode)

If the event with a low priority level out of the existing event and the new event is arranged before or after the event with a high priority level and the preset condition is satisfied, the controller 1b splits the event with the low priority level across the event with the high priority level.

When a plurality of events is set as follows, the event with the low priority level arranged before or after the event with the high priority level during the print schedule adjustment may affect the overall task progress.

### (Existing print event (A))

Job name: company pamphlet print (offset, four colors)
Scheduled start time: 10:00
Duration: 3 hours (end time: 13:00)
Priority level: high (strict delivery date)

### (New print event (B))

Job name: company flier print (monochrome print)
Expected start time: 9:00
Duration: 4 hours (end time: 13:00)
Priority level: low (normal project)

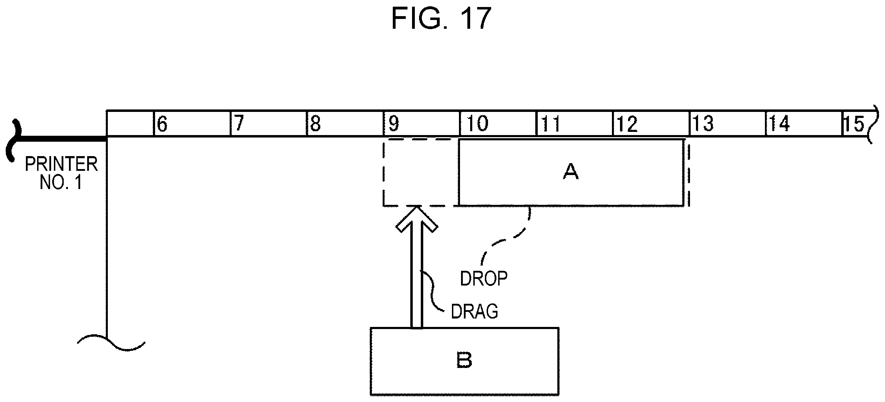

Under the current schedule, the company flier print (9:00 to 13:00) overlaps the company pamphlet print in a period from 10:00 to 13:00 as illustrated in Fig. 17. The company pamphlet print (10:00 to 13:00) is unchangeable because of the high priority level.

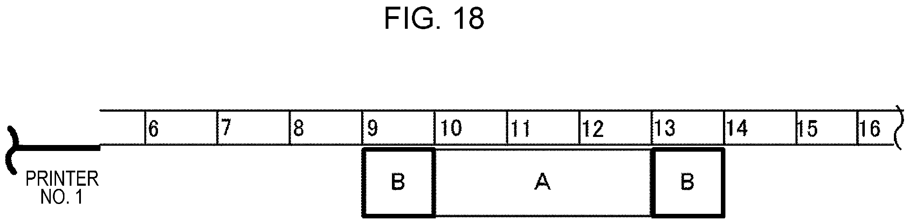

In this case, the controller 1b splits the event with the low priority level as illustrated in Fig. 18 to prevent the delay in task or unnecessary resource use. That is, the controller 1b determines whether the event with the low priority level is arrangeable by being split before and after the event with the high priority level. If the preset condition is satisfied, the controller 1b adjusts the schedule by automatically splitting the event with the low priority level.

Specifically, the controller 1b splits the company flier print (B) before and after the pamphlet print (A) with the high priority level as follows.
Company flier print (split 1): 9:00 to 10:00 (arranged before the event with the high priority level)
Company pamphlet print (10:00 to 13:00) (unchanged)
Company flier print (split 2): 13:00 to 14:00 (arranged after the event with the high priority level)

For example, the controller 1b may display a message "The new event (company flier print) is split into 9:00 to 10:00 and 13:00 to 14:00 because the event overlaps the event with the high priority level (company pamphlet print)."

According to the twelfth mode, the flexibility of the schedule may be improved, and the event may be adjusted by being arranged across the existing event. Thus, the resource may be used effectively, and the printer operation efficiency is improved.

### (Thirteenth Mode)

The inputter 1a receives input of setting made by the user as to whether to split the event with the low priority level.

As described above, the schedule may efficiently be created in consideration of the print job with the high priority level by splitting the event with the low priority level. If all the print jobs are split automatically, the burden on the operator may increase. Therefore, the user may manually set whether to split the event.

The controller 1b may display a prompt for the user to choose whether to split the event with the low priority level. If the user permits the split, the system may automatically adjust an optimum split schedule. If the user rejects the split, the system may execute processes without changing the schedule, and propose another schedule adjustment method.

### (Option Display for User)

The controller 1b may display a pop-up inquiry for the user as to whether to split the event. For example, the controller 1b may display a message "The event with the low priority level (monochrome flier print) overlaps the event with the high priority level (high-quality pamphlet print)." For example, the controller 1b may display a message "Please choose one of the following measures." and further display options "Split event (recommended)," "Change start time without split," and "Manually set schedule."

If the user chooses "Split event (recommended)," the controller 1b may display, for example, a message "The event with the low priority level is split and scheduled for 9:00 to 10:00 and 13:00 to 14:00."

If the user chooses "Change start time without split," the controller 1b may display a message "The start time of the event with the low priority level is changed to 13:00 without splitting the event."

If the user chooses "Manually set schedule," the controller 1b opens a schedule adjustment screen, and allows the user to manually set the split method or the start time.

According to the thirteenth mode, the user may manually make setting. Therefore, the schedule may be adjusted in a specific situation. Thus, the customizability is improved to meet the user's need. Since the user may choose whether to split the event, the schedule may optimally be adjusted depending on situations. Further, the event with the low priority level may be arranged in an appropriate time frame while securing the event with the high priority level. Since the system proposes appropriate options, the user may decide an optimum schedule by intuition.

### (Fourteenth Mode)

If the event with the low priority level is execution of a print job using a digital printer, the controller 1b splits the event with the low priority level across the existing event with the high priority level. If the event with the low priority level is execution of a print job using an offset printer, the controller 1b arranges the event with the high priority level and the event with the low priority level in parallel.

In a print factory, the schedule needs to be managed in consideration of a difference in characteristics between the digital printer and the offset printer. The digital printer may execute print in a short period, but is not suited to mass print. The offset printer is suited to mass print though the activation period is long.

For example, when a plurality of events is set as follows, the controller 1b splits the print job using the digital printer and processes the jobs using the offset printer in parallel to improve the overall production efficiency.

### (Existing print event (A: high priority level))

Job name: company-oriented pamphlet print (offset, four colors)
Scheduled start time: 10:00
Duration: 3 hours (end time: 13:00)
Priority level: high (mass print, strict delivery date)
Equipment: offset printer

### (New print event (B: low priority level, digital printer))

Job name: limited-edition leaflet print (small-volume, variable print)
Expected start time: 9:00
Duration: 4 hours (end time: 13:00)
Priority level: low (small-volume print, with leeway to delivery date)
Equipment: digital printer

### (Still other new print event (C: low priority level, offset printer))

Job name: advertisement flier print (monochrome)
Expected start time: 10:00
Duration: 3 hours (end time: 13:00)
Priority level: low (mass print, cost-oriented)
Equipment: offset printer

The leaflet print using the digital printer (B) may be split due to small-lot print. The advertisement flier print using the offset printer (C) may be processed in parallel due to large-lot print.

In this case, the controller 1b splits the job using the digital printer (B), and arranges the job using the offset printer (C) in parallel.

As a result of the schedule adjustment, the print events are set as follows.
Limited-edition leaflet print (B: split 1): 9:00 to 10:00 (arranged before the job with the high priority level)
Company-oriented pamphlet print (A): 10:00 to 13:00 (unchanged)
Limited-edition leaflet print (B: split 2): 13:00 to 14:00 (arranged after the job with the high priority level)
Advertisement flier print (C): 10:00 to 13:00 (arranged in parallel using the offset printer)

For example, the controller 1b may display a message "The job using the digital printer is split and scheduled for 9:00 to 10:00 and 13:00 to 14:00." The controller 1b may further display a message "The job using the offset printer may be processed in parallel and therefore scheduled for 10:00 to 13:00."

According to the fourteenth mode, the schedule may be adjusted in consideration of the characteristics of the digital printer and the offset printer. Thus, the print jobs may be assigned optimally, and an unnecessary adjustment period may be reduced.

### (Fifteenth Mode)

The controller 1b uses a machine learning model trained based on a setting history as to whether an event with a low priority level has been split in response to input of setting made by the user as to whether to split the event with the low priority level, and determines, if the time frames of different events overlap each other, whether to split the event with a low priority level out of the different events based on the machine learning model.

During the print schedule adjustment, whether to split the event with the low priority level may be determined based on the user's choice in the past or work efficiency. In the exemplary embodiment of the present disclosure, the machine learning model learns the user's past schedule adjustment history, and is applied to future schedule adjustment.

The controller 1b records the past schedule adjustment history, and constructs the machine learning model. When a new event is added, the controller 1b refers to the past history to automatically determine whether to split the event with a low priority level. The controller 1b learns the pattern of the user's choice to improve the accuracy of the schedule adjustment.

### (Existing print event (A: high priority level))

Job name: magazine feature page print (offset, four colors)
Scheduled start time: 9:00
Duration: 4 hours (end time: 13:00)
Priority level: high (strict delivery date)

### (New print event (B: low priority level))

Job name: limited-edition leaflet print (small-volume, variable print)
Expected start time: 9:00
Duration: 4 hours (end time: 13:00)
Priority level: low (normal project)

In response to input of the above setting, the controller 1b searches for similar cases based on the past schedule history. As examples of the past similar cases, a user A splits a job with a low priority level at a probability of 80%, and a user B splits a job with a low priority level at a probability of 40%. Based on the past history, the controller 1b predicts, in this case, that the production efficiency is higher when the event is split at a probability of 75%. Based on determination made by the machine learning model, the controller 1b splits the limited-edition leaflet print (B), and determines an optimum schedule.

As a result of the schedule adjustment, the print events are set as follows.
Limited-edition leaflet print (B: split 1): 9:00 to 10:00 (arranged before the event with the high priority level)
Magazine feature page print (A): 10:00 to 13:00 (unchanged)
Limited-edition leaflet print (B: split 2): 13:00 to 14:00 (arranged after the event with the high priority level)

For example, the controller 1b may display a message "The event with the low priority level is split into 9:00 to 10:00 and 13:00 to 14:00 based on the past history."

### (Configuration of Machine Learning Model)

The machine learning model may be trained using the following data as input.
Priority level of event (high, medium, low)
Event type such as print job or maintenance
Printer type such as digital printer or offset printer
Schedule overlap status (overlap between time frames of existing event and new event)
User's past choice history about split etc.
Production efficiency after split
Effect on postprocess (bookbinding, cutting, packing)

### (2) Operation flow of machine learning model

The controller 1b may record the past schedule adjustment history in a database, or the user may manually accumulate information as to whether the event has been split.

### (3) Model training

The controller 1b trains the machine learning model based on the past data. At this time, the controller 1b uses an algorithm such as a decision tree, a random forest, or a neural network (DNN).

### (4) Schedule adjustment for new event

When a new event is added, the controller 1b automatically determines whether to split the event using the machine learning model. If determination is made to split the event, the controller 1b proposes an optimum schedule.

### (5) Proposal to user and feedback

The controller 1b proposes a draft of the schedule. When the user approves or modifies the draft, the controller 1b records the user's choice in the database, and improves the accuracy of next prediction onwards.

### Specific Operation Example

### (Existing print event (A: high priority level))

Job name: company-oriented pamphlet print (offset, four colors)
Scheduled start time: 10:00
Duration: 3 hours (end time: 13:00)
Priority level: high (mass print, strict delivery date)
Equipment: offset printer

### (New print event (B: low priority level))

Job name: limited-edition leaflet print (small-volume, variable print)
Expected start time: 9:00
Duration: 4 hours (end time: 13:00)
Priority level: low (normal project)
Equipment: digital printer

In response to input of the above setting, the controller 1b applies the machine learning model, and searches for similar cases based on the past schedule history. If the event has been split at a probability of 80% in the past similar projects, the controller 1b predicts, in this case, that the production efficiency is higher when the event is split.

According to the fifteenth mode, the optimum schedule may automatically be determined by learning the past schedule setting history. Thus, the burden on the user may be reduced and the optimum schedule may automatically be created by utilizing the machine learning.

### (Sixteenth Mode)

The controller 1b displays guidance to notify the user that the new event is arranged after the existing event.

During the print schedule adjustment, the new event may be arranged after the existing event. If the operator does not grasp the schedule change, errors or delay in work may occur. Specific Operation Example

### (Existing print event (A))

Job name: company pamphlet print (offset, four colors)
Scheduled start time: 10:00
Duration: 3 hours (end time: 13:00)
Priority level: high (mass print, strict delivery date)

### (New print event (B))

Job name: flier print (monochrome print)
Expected start time: 13:30
Duration: 2 hours (end time: 15:30)
Priority level: low (normal project)

In response to input of the above setting, for example, the controller 1b adds the new flier print (B) after the end time of the existing pamphlet print (A). Specifically, the print events are set as follows.
Company pamphlet print (A): 10:00 to 13:00 (unchanged)
Flier print (B): 13:30 to 15:30 (added after the existing event)

In this case, the controller 1b notifies the user about the schedule change as follows.
"A new event (flier print) is added at 13:30 to 15:30."
"The new event is automatically arranged after the existing event (company pamphlet print). "
"Please check and approve the schedule."

Examples of the notification method include displaying a pop-up on a schedule management monitor in the factory, notifying a tablet or PC of the user, and displaying change information on a control panel of the printer.

According to the sixteenth mode, the schedule adjustment may be visualized and erroneous operation may be prevented by providing the guidance to the user. Thus, the clarity of work may be improved, and the schedule may be managed intuitively.

### (Seventeenth Mode)

The controller 1b displays guidance to notify the user about the event change.

Through the automatic adjustment of the print schedule, the start time or the end time of the event may be changed. If the operator or a person involved does not know the change, delay or errors in work may occur.

### Specific Operation Example

### (Existing print event (A))

Job name: advertisement pamphlet print (offset, four colors)
Scheduled start time: 9:00
Duration: 3 hours (end time: 12:00)
Priority level: high (strict delivery date)

### (New print event (B))

Job name: small-lot poster print (monochrome print)
Expected start time: 12:30
Duration: 2 hours (end time: 14:30)
Priority level: low (normal project)

If the advertisement pamphlet print (A) is found to be delayed by 30 minutes due to extension of an ink dry period, the controller 1b adjusts (changes) the schedule as follows.

### (Before change)

Advertisement pamphlet print (A): 9:00 to 12:00
Small-lot poster print (B): 12:30 to 14:30

### (After change)

Advertisement pamphlet print (A): 9:00 to 12:30 (delayed by 30 minutes)
Small-lot poster print (B): 13:00 to 15:00 (postponed by 30 minutes)

In this case, the controller 1b notifies the user about the schedule change as follows.
"The schedule has been changed."
"The advertisement pamphlet print (A) is changed to 9:00 to 12:30."
"The small-lot poster print (B) is changed to 13:00 to 15:00."
"Please check and approve the schedule."

Examples of the notification method include displaying a pop-up on a schedule management monitor in the factory, notifying a tablet or PC of the user, and displaying change information on a control panel of the printer.

According to the seventeenth mode, the user may grasp the schedule change in real time, and appropriate adjustment may be achieved. Thus, intuitive operability is improved, and the user experience is improved.

### (Eighteenth Mode)

The program 1A causes a computer to: arrange and display a plurality of events along the temporal axis; receive input of a time frame in which a new event is to be arranged; if an existing event is present in the time frame in which the new event is to be arranged, change, based on the priority level of the existing event and the priority level of the new event, the time frame of the event with a low priority level out of the existing event and the new event without changing the time frame of the event with a high priority level; and display the existing event and the new event.

According to the eighteenth mode, the schedule adjustment may be automated by the program 1A, and the burden of manual adjustment may be reduced. Thus, the print schedule is managed efficiently, and human errors may be reduced.

### (Nineteenth Mode)

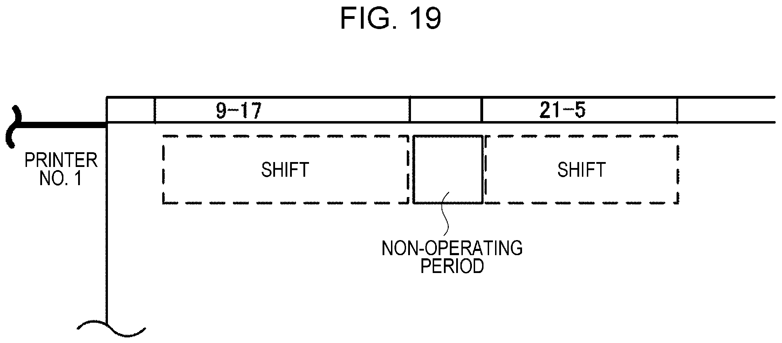

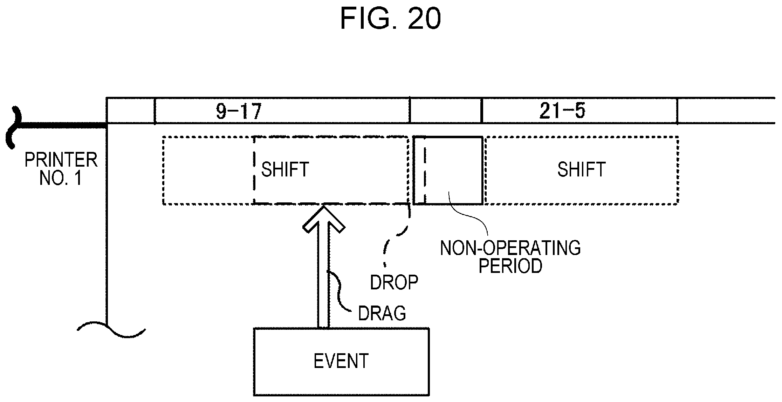

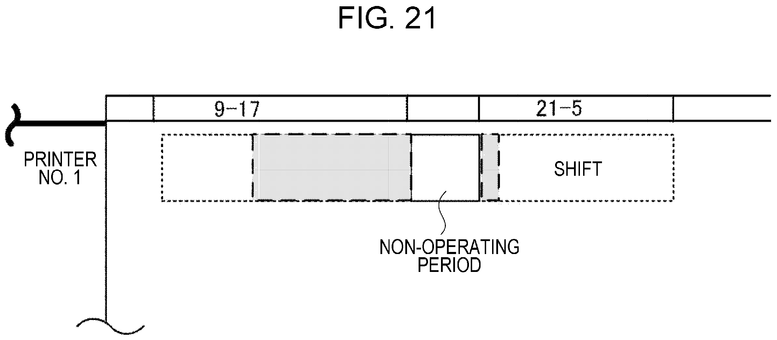

In a printing company, production is carried out by scheduling print tasks etc. for each shift. If any print task is incomplete before the end time of a shift set in a specific time frame, an event of the remaining print task may be set in the next shift. If a non-operating period is present between the two shifts as illustrated in Fig. 19, the new event needs to be set across the non-operating period. In the example of Fig. 19, the non-operating period is present from 17:00 to 21:00. If a specific event is set before the non-operating period and part of the event (e.g., 1 hour) overlaps the non-operating period as illustrated in Fig. 20, the controller 1b may adjust the width of the event before the non-operating period and set part of the event overlapping the non-operating period after the non-operating period as illustrated in Fig. 21. In this way, the print event (about 1 hour) that is incomplete in the shift before the non-operating period is automatically adjusted to allow the user to grasp that the print event continues to the next shift. The controller 1b may color the card of the non-operating period, that is, put a color different from that of the print event on the card of the non-operating period. Thus, the user may also grasp that the non-operating period is present midway along the print task.

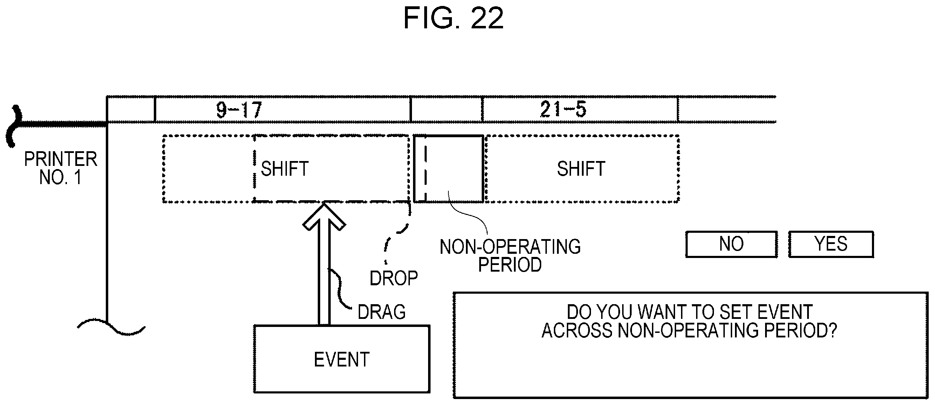

If there is a need to continue the task in the shift before the non-operating period without setting the remainder across the non-operating period as in a case where the delivery date is approaching, a message may be displayed, for example, in response to drop of a new event as illustrated in Fig. 22 to inquire of the user whether to set the event across the non-operating period.

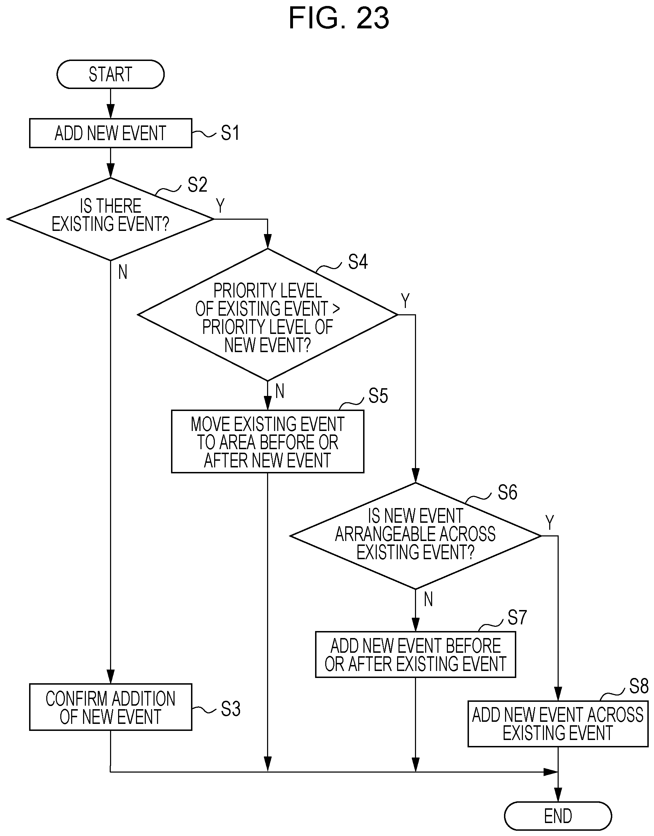

Next, an operation of the information processing system 100 is described with reference to Fig. 23. Fig. 23 is a flowchart illustrating the operation of the information processing system 100.

In Step S1, for example, the user drags the print schedule SC1 and moves it to the position of an existing event as illustrated in Fig. 4 to add a new event. In Step S2, the information processing system 100 determines whether an existing event is present, that is, whether the new event overlaps an existing event.

If no existing event is present, the information processing system 100 proceeds to Step S3 to add the new event at the drop position, and terminates the series of processes.

If an existing event is present, the information processing system 100 proceeds to Step S4 to compare the priority levels of the existing event and the new event.

If the priority level of the existing event is lower than the priority level of the new event, the information processing system 100 proceeds to Step S5 to move the existing event to an area before or after the new event, and terminates the series of processes.

If the priority level of the existing event is higher than the priority level of the new event, the information processing system 100 proceeds to Step S6 to determine whether the new event with the low priority level is arrangeable across the existing event.

If the new event is not arrangeable across the existing event, the information processing system 100 proceeds to Step S7 to add the new event before or after the existing event without splitting the new event, and terminates the series of processes.

If the new event is arrangeable across the existing event, the information processing system 100 proceeds to Step S8 to add the new event so that the new event is split into two events and the two split events are arranged across the existing event, and terminates the series of processes.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content. The program of the present application may be provided as a program product.

In the exemplary embodiment of the present disclosure, the user may input a time frame, for example, by one of the following two methods when adding a new event.

### (1) Input by moving job card on schedule screen

In this method, the user may intuitively change the start time or the end time of the event by dragging and dropping a job card (event block) on a schedule screen. For example, the time frame of the event may be adjusted by moving an existing job card arranged on a schedule bar of the screen. For example, the start time of the event may be changed by sliding the job card from 10:00 to 11:30. The start time of the job card is changed by dragging the job card, and a new time frame is confirmed by dropping the job card. The in-between period GT and the non-operating period may be utilized to prompt the user to move the event to an appropriate time frame. The function of the guide GD may be utilized to highlight the recommended time frame, thereby achieving more efficient schedule adjustment. In this method, the event may be moved by intuitive operation, and the time frame may easily be adjusted by mouse or touch operation. The changed schedule may quickly be viewed by visual feedback. Further, real-time adjustment may be achieved in consideration of the non-operating period and the existing event.

### (2) Designation of time frame on setting screen

In this method, the user directly designates "start time" and "end time" by numerical input or selection. For example, the user directly inputs numerical values of "start time of new event" and "end time" on a setting screen. The user selects an appropriate time frame using a selection tool such as a drop-down list or a calendar. The priority level may be changed as well. For example, setting may be made so that the event with a high priority level is fixed and the adjustment of the time frame of the event with a low priority level is permitted.

In the exemplary embodiment of the present disclosure, a function of fixing (locking) a specific event (pinning) may be used during the schedule adjustment. The pinned event is not moved even if another event is added. Therefore, the event with a high priority level is maintained securely. If a pinned existing event is present and a new event overlaps the time frame of the pinned existing event, the new event may automatically be slid to an area after the pinned existing event. That is, when the new event is added, the pinned existing event is not moved but the arrangement of the new event may be adjusted.

### (Without pinning)

Existing event A (10:00 to 11:00)
New event B (10:30 to 11:30) is added
Either of them is adjusted before or after the other depending on priority levels.

### (With pinning)

Existing event A (10:00 to 11:00) is "pinned"
New event B (10:30 to 11:30) is added
B does not overlap A and is automatically postponed to 11:00 or later.

The downtime may be calculated by the information processing system 100. Alternatively, the downtime may be calculated by an apparatus outside the information processing system 100, and the calculation result may be used by the information processing system 100.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

### Appendix

(((1))) An information processing system comprising at least one processor configured to:
   arrange and display a plurality of events along a temporal axis;
   receive input of a time frame in which a new event is to be arranged;
   if an existing event is present in the time frame in which the new event is to be arranged, change, based on a priority level of the existing event and a priority level of the new event, a time frame of an event with a low priority level out of the existing event and the new event without changing a time frame of an event with a high priority level; and
   display the existing event and the new event.
(((2))) The information processing system according to (((1))), wherein the processor is configured to arrange the event with the low priority level out of the existing event and the new event in a time frame before or after the event with the high priority level.
(((3))) The information processing system according to (((1))) or (((2))), wherein the processor is configured to receive input of the priority level of the new event and the priority level of the existing event by a user.
(((4))) The information processing system according to any one of (((1))) to (((3))), wherein the processor is configured to, if one of the existing event and the new event is execution of a monochrome print job and another one of the existing event and the new event is execution of a multicolor print job, set a higher priority level for an event related to the execution of the monochrome print job than for an event related to the execution of the multicolor print job.
(((5))) The information processing system according to any one of (((1))) to (((4))), wherein the processor is configured to:
   acquire a first downtime that is a preparatory period until a printer starts print corresponding to the new event when the existing event is to be processed earlier than the new event, and a second downtime that is a preparatory period until the printer starts print corresponding to the existing event when the new event is to be processed earlier than the existing event; and
   set a higher priority level for an event to be processed earlier than for an event to be processed later to achieve a shorter downtime out of the first downtime and the second downtime.
(((6))) The information processing system according to any one of (((1))) to (((5))), wherein the processor is configured to, if the event with the low priority level out of the existing event and the new event is arranged after the event with the high priority level and an end time of the event with the low priority level is later than a start time of another postprocess, reverse the priority level of the existing event and the priority level of the new event.
(((7))) The information processing system according to any one of (((1))) to (((6))), wherein the processor is configured to, if the event with the low priority level is execution of a print job and an end time of the print job is later than the start time of the postprocess associated with the print job, reverse the priority level of the existing event and the priority level of the new event.
(((8))) The information processing system according to any one of (((1))) to (((7))), wherein the processor is configured to display an alert if the event with the low priority level out of the existing event and the new event is arranged before or after the event with the high priority level and the processor determines that a preset condition is satisfied for the event with the low priority level.
(((9))) The information processing system according to any one of (((1))) to (((8))), wherein the processor is configured to determine that the condition is satisfied if the event with the low priority level out of the existing event and the new event is arranged after the event with the high priority level and an end time of the event with the low priority level is later than a start time of another postprocess.
(((10))) The information processing system according to any one of (((1))) to (((9))), wherein the processor is configured to determine that the condition is satisfied if the event with the low priority level out of the existing event and the new event is arranged before or after the event with the high priority level and part or all of a period from a start time to an end time of the event with the low priority level overlaps a non-operating period in which a printer is not operating.
(((11))) The information processing system according to any one of (((1))) to (((10))), wherein the processor is configured to determine that the condition is satisfied if the event with the low priority level out of the existing event and the new event is arranged before or after the event with the high priority level, part or all of a period from a start time to an end time of the event with the low priority level overlaps still another existing event, and the other existing event has a higher priority level than the event with the low priority level.
(((12))) The information processing system according to any one of (((1))) to (((11))), wherein the processor is configured to, if the event with the low priority level out of the existing event and the new event is arranged before or after the event with the high priority level and a preset condition is satisfied, split the event with the low priority level across the event with the high priority level.
(((13))) The information processing system according to any one of (((1))) to (((12))), wherein the processor is configured to receive input of setting made by a user as to whether to split the event with the low priority level.
(((14))) The information processing system according to any one of (((1))) to (((13))), wherein the processor is configured to:
   if the event with the low priority level is execution of a print job using a digital printer, split the event with the low priority level across the existing event with the high priority level; and
   if the event with the low priority level is execution of a print job using an offset printer, arrange the event with the high priority level and the event with the low priority level in parallel.
(((15))) The information processing system according to any one of (((1))) to (((14))), wherein the processor is configured to use a machine learning model trained based on a setting history as to whether the event with the low priority level has been split in response to input of setting made by a user as to whether to split the event with the low priority level, and determine, if time frames of different events overlap each other, whether to split an event with a low priority level out of the different events based on the machine learning model.
(((16))) The information processing system according to any one of (((1))) to (((15))), wherein the processor is configured to display guidance to notify a user that the new event is arranged after the existing event.
(((17))) The information processing system according to any one of (((1))) to (((16))), wherein the processor is configured to display guidance to notify a user about a change of the events.
(((18))) A program causing a computer to execute a process comprising:
   arranging and displaying a plurality of events along a temporal axis;
   receiving input of a time frame in which a new event is to be arranged;
   if an existing event is present in the time frame in which the new event is to be arranged, changing, based on a priority level of the existing event and a priority level of the new event, a time frame of an event with a low priority level out of the existing event and the new event without changing a time frame of an event with a high priority level; and
   displaying the existing event and the new event.
(((19))) A computer program product comprising a program causing a computer to execute a process comprising:
   arranging and displaying a plurality of events along a temporal axis;
   receiving input of a time frame in which a new event is to be arranged;
   if an existing event is present in the time frame in which the new event is to be arranged, changing, based on a priority level of the existing event and a priority level of the new event, a time frame of an event with a low priority level out of the existing event and the new event without changing a time frame of an event with a high priority level; and
   displaying the existing event and the new event.
(((20))) A computer readable recording medium storing a program causing a computer to execute a process comprising:
   arranging and displaying a plurality of events along a temporal axis;
   receiving input of a time frame in which a new event is to be arranged;
   if an existing event is present in the time frame in which the new event is to be arranged, changing, based on a priority level of the existing event and a priority level of the new event, a time frame of an event with a low priority level out of the existing event and the new event without changing a time frame of an event with a high priority level; and
   displaying the existing event and the new event.

According to (((1))), the schedule may be adjusted in consideration of the priority levels of the existing event and the new event, and the schedule may be managed as intended by the user.

According to (((2))), the new event may be arranged while maintaining the existing event with the high priority level.

According to (((3))), the user may set any priority level.

According to (((4))), color migration is prevented and the print quality is improved by processing the monochrome print with priority.

According to (((5))), the printer adjustment period (downtime) may be minimized, and the tasks may be changed smoothly.

According to (((6))), the adjustment may be executed by moving the existing event so as not to affect the start of the postprocess.

According to (((7))), the effect on the schedule of the postprocess may be minimized, and the process transition may be made smoothly.

According to (((8))), the user may make appropriate decision by displaying the alert before a problem arises due to the schedule change.

According to (((9))), the effect on the schedule of the postprocess may be minimized.

According to (((10))), the schedule may be adjusted in consideration of the non-operating period.

According to (((11))), the schedule may be adjusted in consideration of the job with a higher priority level.

According to (((12))), the flexibility of the schedule may be improved, and the event may be adjusted by being arranged across the existing event.

According to (((13))), the user may manually make setting. Therefore, the schedule may be adjusted in a specific situation.

According to (((14))), the schedule may be adjusted in consideration of the characteristics of the digital printer and the offset printer.

According to (((15))), the optimum schedule may automatically be determined by learning the past schedule setting history.

According to (((16))), the schedule adjustment may be visualized and erroneous operation may be prevented by providing the guidance to the user.

According to (((17))), the user may grasp the schedule change in real time, and appropriate adjustment may be achieved.

According to (((18))), the schedule adjustment may be automated by the program, and the burden of manual adjustment may be reduced.

According to (((19))), the program may be provided as the computer program product including the program, and may be utilized in various system environments.

According to (((20))), the program is stored in the computer readable recording medium to facilitate distribution and introduction of software.

## Claims

1. An information processing system comprising at least one processor configured to:
arrange and display a plurality of events along a temporal axis;
receive input of a time frame in which a new event is to be arranged;
if an existing event is present in the time frame in which the new event is to be arranged, change, based on a priority level of the existing event and a priority level of the new event, a time frame of an event with a low priority level out of the existing event and the new event without changing a time frame of an event with a high priority level; and
display the existing event and the new event.

2. The information processing system according to claim 1, wherein the processor is configured to arrange the event with the low priority level out of the existing event and the new event in a time frame before or after the event with the high priority level.

3. The information processing system according to claim 1 or 2, wherein the processor is configured to receive input of the priority level of the new event and the priority level of the existing event by a user.

4. The information processing system according to any one of claims 1 to 3, wherein the processor is configured to, if one of the existing event and the new event is execution of a monochrome print job and another one of the existing event and the new event is execution of a multicolor print job, set a higher priority level for an event related to the execution of the monochrome print job than for an event related to the execution of the multicolor print job.

5. The information processing system according to any one of claims 1 to 4, wherein the processor is configured to:
acquire a first downtime that is a preparatory period until a printer starts print corresponding to the new event when the existing event is to be processed earlier than the new event, and a second downtime that is a preparatory period until the printer starts print corresponding to the existing event when the new event is to be processed earlier than the existing event; and
set a higher priority level for an event to be processed earlier than for an event to be processed later to achieve a shorter downtime out of the first downtime and the second downtime.

6. The information processing system according to any one of claims 1 to 5, wherein the processor is configured to, if the event with the low priority level out of the existing event and the new event is arranged after the event with the high priority level and an end time of the event with the low priority level is later than a start time of another postprocess, reverse the priority level of the existing event and the priority level of the new event.

7. The information processing system according to any one of claims 1 to 6, wherein the processor is configured to, if the event with the low priority level is execution of a print job and an end time of the print job is later than the start time of the postprocess associated with the print job, reverse the priority level of the existing event and the priority level of the new event.

8. The information processing system according to any one of claims 1 to 7, wherein the processor is configured to display an alert if the event with the low priority level out of the existing event and the new event is arranged before or after the event with the high priority level and the processor determines that a preset condition is satisfied for the event with the low priority level.

9. The information processing system according to any one of claims 1 to 8, wherein the processor is configured to determine that the condition is satisfied if the event with the low priority level out of the existing event and the new event is arranged after the event with the high priority level and an end time of the event with the low priority level is later than a start time of another postprocess.

10. The information processing system according to any one of claims 1 to 9, wherein the processor is configured to determine that the condition is satisfied if the event with the low priority level out of the existing event and the new event is arranged before or after the event with the high priority level and part or all of a period from a start time to an end time of the event with the low priority level overlaps a non-operating period in which a printer is not operating.

11. The information processing system according to any one of claims 1 to 10, wherein the processor is configured to determine that the condition is satisfied if the event with the low priority level out of the existing event and the new event is arranged before or after the event with the high priority level, part or all of a period from a start time to an end time of the event with the low priority level overlaps still another existing event, and the other existing event has a higher priority level than the event with the low priority level.

12. The information processing system according to any one of claims 1 to 11, wherein the processor is configured to, if the event with the low priority level out of the existing event and the new event is arranged before or after the event with the high priority level and a preset condition is satisfied, split the event with the low priority level across the event with the high priority level.

13. The information processing system according to any one of claims 1 to 12, wherein the processor is configured to:
if the event with the low priority level is execution of a print job using a digital printer, split the event with the low priority level across the existing event with the high priority level; and
if the event with the low priority level is execution of a print job using an offset printer, arrange the event with the high priority level and the event with the low priority level in parallel.

14. The information processing system according to any one of claims 1 to 13, wherein the processor is configured to use a machine learning model trained based on a setting history as to whether the event with the low priority level has been split in response to input of setting made by a user as to whether to split the event with the low priority level, and determine, if time frames of different events overlap each other, whether to split an event with a low priority level out of the different events based on the machine learning model.

15. A program causing a computer to execute a process comprising:
arranging and displaying a plurality of events along a temporal axis;
receiving input of a time frame in which a new event is to be arranged;
if an existing event is present in the time frame in which the new event is to be arranged, changing, based on a priority level of the existing event and a priority level of the new event, a time frame of an event with a low priority level out of the existing event and the new event without changing a time frame of an event with a high priority level; and
displaying the existing event and the new event.
